# EUROPÄISCHE PATENTANMELDUNG

(11) **EP 0 567 825 A2**
(43) Veröffentlichungstag der Anmeldung: **03.11.1993**
(21) Anmeldenummer: 93105897.8
(22) Anmeldetag: 09.04.1993
(51) Int. Cl.: B29C 65/74

(54) **Vorrichtung zum kontinuierlichen Trennschweissen wenigstens zweier aufeinanderliegender Kunststoff-Folien**

(30) Priorität: 25.04.1992 DE 4213748
(71) Anmelder: BECK PACKAUTOMATEN GMBH & CO., D-72636 Frickenhausen (DE)
(72) Erfinder: Beck, Hans, D-7440 Nürtingen (DE); Pfeiffer, Helmut, D-7443 Frickenhausen 3 (DE)
(74) Vertreter: Hoeger, Stellrecht & Partner

(57) **Zusammenfassung**

Eine Vorrichtung zum kontinuierlichen Trennschweißen wenigstens zweier aufeinanderliegender, in einer Zuführebene vorgeschobener Kunststoff-Folien weist ein beheiztes, die Folien durch eine Schweißnaht miteinander verbindendes und durchtrennendes Trennschweißmesser (8) auf, das sich mit einer an den Folien (21,22) angreifenden Trennkante aus einem Bereich oberhalb der Zuführebene bis in einen Bereich unterhalb der Zuführebene erstreckt. Zusätzlich zu der in Richtung der Schweißnaht verlaufenden Vorschubbewegung der Kunststoff-Folien relativ zum Trennschweißmesser ist eine zweite Relativbewegung zwischen Trennschweißmesser und Folien vorgesehen, die eine zur Schweißnaht senkrecht gerichtete Komponente hat. Das Trennschweißmesser weist einen gegenüber seiner Trennkante stufenförmig zurückversetzten, die Oberfläche der einen Folie frei schleifend berührenden, relativ breiten Schweißabschnitt zum Erzeugen einer Breitschweißnaht auf. Der Schweißabschnitt erstreckt sich aus einem Bereich oberhalb der Kunststoff-Folien bis in einen Bereich unterhalb dieser Folien.

## Beschreibung

Die Erfindung betrifft eine Vorrichtung zum kontinuierlichen Trennschweißen wenigstens zweier aufeinanderliegender, in einer Zuführebene vorgeschobener Kunststoff-Folien mit einem beheizten, die Folien durch eine Schweißnaht miteinander verbindenden und durchtrennenden Trennschweißmesser, das sich mit einer an den Kunststoff-Folien angreifenden Trennkante aus einem Bereich oberhalb der Kunststoff-Folien bis in einen Bereich unterhalb der Kunststoff-Folien erstreckt, wobei zusätzlich zu der in Richtung der Schweißnaht relativ zum Trennschweißmesser verlaufenden Vorschubbewegung der Kunststoff-Folien eine zweite Relativbewegung zwischen Trennschweißmesser und Kunststoff-Folien vorgesehen ist, die eine zur Schweißnaht senkrecht gerichtete Komponente hat.

Eine derartige Vorrichtung ist aus der DE-PS 12 09 722 bekannt. Bei dieser Vorrichtung ist das wiegend, drehend oder stoßend ausgebildete Trennschweißmesser als eine elektrisch beheizte, relativ dünne Scheibe ausgebildet, deren Rand als Schneide oder Trennkante wirkt und die Folien unter Aufschmelzung durchdringt und voneinander trennt. Dabei werden während der Aufschmelzung die entstehenden Folienkanten zu beiden Seiten des Trennschweißmessers durch eine Schweißnaht miteinander verbunden. Die so entstehende Schweißnaht ist sehr schmal und genügt daher häufig nicht den an derartige Schweißnähte gestellten Festigkeitsanforderungen.

Es ist bei einer anderen Vorrichtung (DE-PS 36 29 497) bekannt, unter erheblichem apparativem Aufwand bei Verwendung schräg verlaufender, beheizter Metallbänder relativ breite und festere Schweißnähte herzustellen, wobei es jedoch erforderlich ist, die miteinander verbundenen Folien im Anschluß an die Herstellung der breiten Schweißnaht durch eine besondere Trennvorrichtung mit Messern oder dergleichen zu trennen, was einen zusätzlichen apparativen Aufwand erforderlich macht.

Schließlich ist eine gattungsfremde Trennschweißvorrichtung bekannt (DE-GM 87 05 710), die nach Art eines Stanzwerkzeuges von oben her auf zwei Kunststoff-Folien gedrückt wird, um eine Trennschweißnaht herzustellen. In diesem Falle findet also keine Vorschubbewegung der Kunststoff-Folien relativ zur Trennschweißvorrichtung statt. Diese gattungsfremde Vorrichtung weist ein Trennschneidmesser auf, das einen gegenüber einer Trennkante zurückversetzten Schweißabschnitt aufweist. Dieser Schweißabschnitt wirkt mit einer wie ein Amboß wirkenden, unterhalb der zu verschweißenden Folien gelegenen Gegendruckfläche zusammen und preßt während der Erzeugung der Schweißnaht die Folien an diese Gegendruckfläche an.

Ein derartiges unter relativ hohem Druck erfolgendes Anpressen an eine Gegendruckfolie ist bei relativ zum Schweißwerkzeug vorgeschobenen Kunststoff-Folien nicht möglich.

Es ist Aufgabe der Erfindung, eine gattungsgemäße Vorrichtung in einfacher Weise so zu verbessern, daß in einem einzigen Arbeitsvorgang eine Trennschweißnaht von erheblicher Breite und damit hoher Festigkeit hergestellt werden kann.

Die Aufgabe wird bei einer gattungsgemäßen Vorrichtung dadurch gelöst, daß das Trennschweißmesser einen gegenüber seiner Trennkante stufenförmig zurückversetzten, die Oberfläche der einen Folie frei schleifend berührenden, relativ breiten Schweißabschnitt zum Erzeugen einer Breitschweißnaht aufweist, und dieser Schweißabschnitt sich aus einem Bereich oberhalb der Kunststoff-Folien bis in einen Bereich unterhalb der Kunststoff-Folien erstreckt.

Es wurde in überraschender Weise gefunden daß allein durch frei schleifende Berührung der miteinander zu verbindenden Kunststoff-Folien an dem abgestuften Schweißabschnitt eine feste Breitschweißnaht erzeugt werden kann.

Die nachstehende Beschreibung bevorzugter Ausführungsformen von Trennschweißvorrichtungen dient im Zusammenhang mit beiliegender Zeichnung der weiteren Erläuterung. Es zeigen:
- Figur 1: schematisch in Seitenansicht eine Vorrichtung zum kontinuierlichen Trennschweißen wenigstens zweier aufeinanderliegender Kunststoff-Folien mit einem wiegenden Trennschweißmesser;
- Figur 2: eine Vorderansicht in Richtung des Pfeiles A in Figur 1;
- Figur 3: eine vergrößerte Schnittansicht eines Trennschweißmessers der Vorrichtung aus Figur 1 und 2;
- Figur 4: schematisch in Vorderansicht ein rotierendes Trennschweißmesser;
- Figur 5: in Vorderansicht schematisch ein Stichmesser;
- Figur 6: schematisch ein Trennschweißmesser mit Spannschiene und
- Figur 7: eine schematische Schnittansicht entlang der Linie 7-7 in Figur 6.

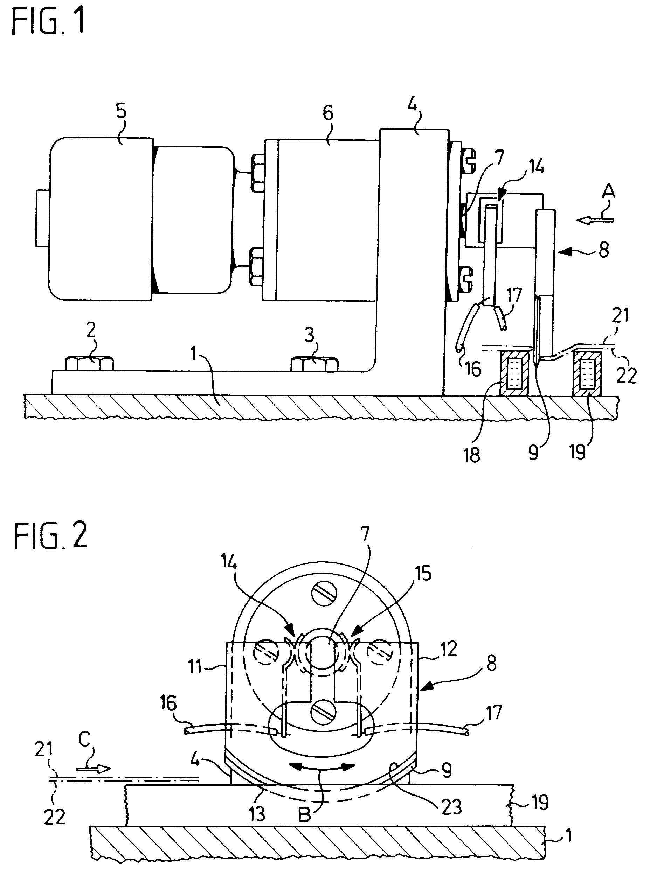

Die Figur 1 zeigt einen auf einem stationären Maschinengestell 1 mit Hilfe von Schrauben 2, 3 fest angeordneten Lagerblock 4, an dem ein Elektromotor 5 mit Umkehrgetriebe 6 fest angeordnet ist. Einer Ausgangswelle 7 des Umkehrgetriebes 6 wird durch die Wirkung dieses Getriebes eine oszillierende Bewegung über einen Winkelbereich von beispielsweise zwischen 10° und 60° verliehen. Am freien Ende der Ausgangswelle 7 ist, wie auf der Zeichnung nur schematisch angedeutet, ein Trennschweißmesser 8 an sich bekannter Art befestigt, welches eine zur Achse der Ausgangswelle 7 konzentrisch kreisförmig gebogene Schneide oder Trennkante 9 aufweist. Das Trennschweißmesser 8 mit seiner Trennkante 9 ist oszillierend oder "wiegend" in Richtung des Doppelpfeils B (Figur 2) angetrieben.

Das aus elektrisch leitendem Material bestehende Trennschweißmesser 8 umfaßt, wie aus Figur 2 ersichtlich, in an sich bekannter Weise zwei Schenkel 11, 12, die durch einen Zwischenraum 13 voneinander getrennt sind. Diese Schenkel 11, 12 stehen über Schleifglieder 14, 15 und elektrische Zuleitungen 16, 17 mit einer (nicht dargestellten) elektrischen Stromquelle in Verbindung, so daß das wiegende Trennschweißmesser 8 elektrisch auf eine gewünschte Temperatur aufgeheizt werden kann.

Wie aus Figur 1 ersichtlich, sind auf dem Maschinengestell 1 zwei gekühlte Leisten 18, 19 in gegenseitigem Abstand fest angeordnet, zwischen die das Trennschweißmesser 8 von oben nach unten eindringen kann, wobei das Trennschweißmesser 8 näher an der Leiste 18 als an der Leiste 19 liegt. Die Oberflächen der Leisten 18, 19 bilden eine Unterlage für zwei Kunststoff-Folien 21, 22, beispielsweise aus Polyäthylen, die durch eine Trennschweißnaht miteinander verbunden werden sollen. Die beiden Kunststoff-Folien 21, 22 umhüllen in der Regel auf der in Figur 1 rechts gelegenen Seite des Trennschweißmessers 8 ein Verpackungsgut. Auf der links vom Trennschweißmesser 8 gelegenen Seite wird ein relativ schmaler Abfallstreifen, wie an sich bekannt, von den Folien 21, 22 abgetrennt.

Die Kunststoff-Folien 21, 22 werden senkrecht zur Zeichnungsebene der Figur 1 und in Richtung des Pfeiles C in Figur 2 relativ zum Trennschweißmesser 8 vorgeschoben. Dabei definieren die Oberflächen der beiden Leisten 18, 19, auf welcher die Folien 21, 22 aufruhen, eine Zuführebene für diese Folien. Während des Schweißvorganges führt das oszillierende Trennschweißmesser 8 relativ zu den Kunststoff-Folien 21, 22 eine zweite Bewegung aus, die eine zur Vorschubrichtung (Pfeil C in Figur 2) und zur gebildeten Schweißnaht senkrecht gerichtete Komponente hat.

Bei der dargestellten Ausführungsform werden zwei Kunststoff-Folien 21, 22 miteinander verschweißt. Es ist möglich, auch mehr als zwei Folien mit Hilfe der beschriebenen Vorrichtung durch eine Trennschweißnaht miteinander zu verbinden.

Die der Auflage der Folien 21, 22 dienenden Leisten 18, 19 können auch durch andere, die Zuführebene definierende Unterlagen ersetzt werden, beispielsweise auch durch in Richtung des Pfeiles C vorlaufende, die Folien 21, 22 mitnehmende, an der unteren Folie 22 angreifende Transportriemen. Parallel hierzu gerichtete Transportriemen können auch an der oberen Folie 21 angreifen. Derartige Transportmittel sind an sich bekannt.

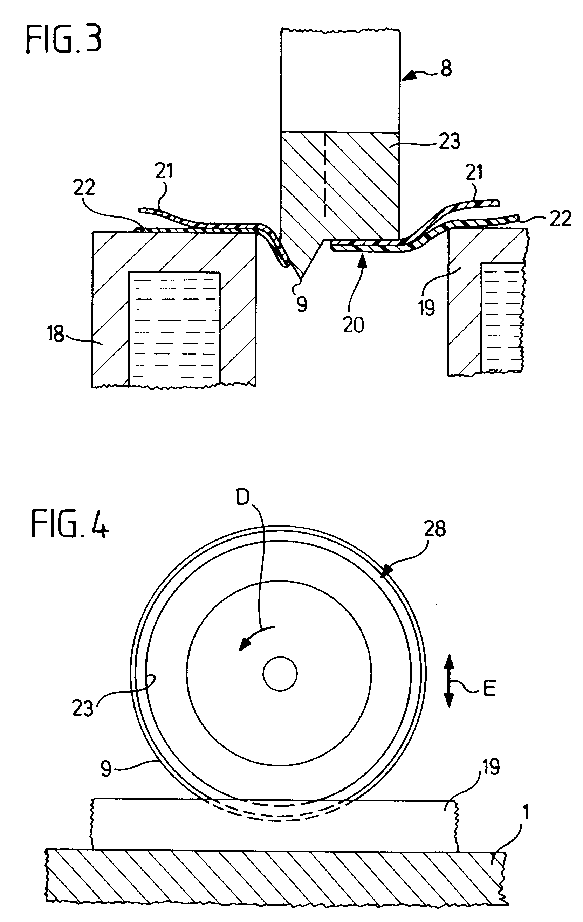

Das Querschnittsprofil des Trennschweißmessers 8 ist am besten aus Figur 3 ersichtlich. Wie dargestellt, weist das Trennschweißmesser 8 einen gegenüber seiner Trennkante 9 stufenförmig zurückversetzten, relativ breiten Schweißabschnitt 23 auf, der sich mit seiner an der oberen Folie 21 anliegenden Fläche bogenförmig parallel zur Trennkante 9 erstreckt. Wie aus Figur 2 und 3 ersichtlich, erstreckt sich das Trennschweißmesser 8 mit seiner an den Folien 21, 22 angreifenden Trennkante 9 aus einem Bereich oberhalb der in der Zuführebene vorgeschobenen Folien bis in einen Bereich unterhalb dieser Zuführebene, wobei diese Zuführebene, wie gesagt, im dargestellten Ausführungsbeispiel von den Oberflächen der gekühlten Leisten 18, 19 gebildet wird. Dieser am besten aus Figur 2 ersichtliche Verlauf der Trennkante 9 führt dazu, daß die in der Zuführebene in Richtung des Pfeiles C vorgeschobenen Kunststoff-Folien 21, 22 mit ihren jeweiligen Stirnkanten an der oberhalb dieser Zuführebene schräg nach unten gerichteten Trennkante 9 anstoßen, wobei im Verlauf des weiteren Vorschubes der Folien der Trennschweißvorgang beginnt.

Im Verlauf dieses Trennschweißvorganges durchdringt die Trennkante 9 die beiden übereinander liegenden Folien und trennt hierbei, wie in Figur 3 dargestellt, an der linken Seite des Trennschweißmessers 8 von den Folien 21, 22 einen Abfallstreifen ab, der an seiner seitlich an der Flanke der Trennkante 9 anliegenden Randkante in herkömmlicher Weise mit einer schmalen, die Folien 21, 22 verbindenden Trennschweißnaht verbunden ist. Eine solche Trennschweißnaht entsteht auch an der gegenüberliegenden Randkante der Folien 21, 22. Die Folien 21, 22 liegen jedoch während ihres Vorschubes im rechten Bereich des Trennschweißmessers 8 an der Unterseite des Schweißabschnitts 23 frei schleifend und ohne Abstützung z. B. durch die Leiste 19 an. Die Hitze des Trennschweißmessers 8 überträgt sich auch in diesem Schweißabschnitt 23 auf die unter ihm vorbeigleitenden Folien 21, 22, so daß diese über die Breite des Abschnitts 23 hinweg in Form einer relativ breiten Schweißnaht miteinander verschweißt werden, die naturgemäß wesentlich fester als die schmale Trennschweißnaht der Folien 21, 22 auf der in Figur 3 links gelegenen Seite des Trennschweißmessers 8 ist.

Wesentlich bei der Ausbildung der breiten Schweißnaht unter dem Schweißabschnitt 23 ist, daß sich dieser Abschnitt 23 - vgl. auch Figur 2 - aus einem Bereich oberhalb der in der Zuführebene vorgeschobenen Kunststoff-Folien bis in einen Bereich unterhalb dieser Kunststoff-Folien erstreckt. Hierdurch entsteht nämlich eine geringfügige, auf die Folien 21, 22 einwirkende Zugspannung, mit welcher sie an die Unterseite des Schweißabschnitts 23 leicht angedrückt werden. Die Übertragung dieser Zugspannung auf die Folien 21, 22 kann deshalb erfolgen, weil unmittelbar vor Ausführung des Trennschnittes durch die Folien mittels der Trennkante 9 die in Figur 3 links gelegenen Folienteile noch mit den in Figur 3 rechts gelegenen Folienteilen zusammenhängen. Jedenfalls reicht diese relativ sanfte Anpressung der Folien 21, 22 an die Unterseite des Schweißabschnitts 23 aus, um dort eine feste "Breitschweißnaht" 20 zu erzeugen, deren Breite etwa der Breite des Schweißabschnitts 23 entspricht.

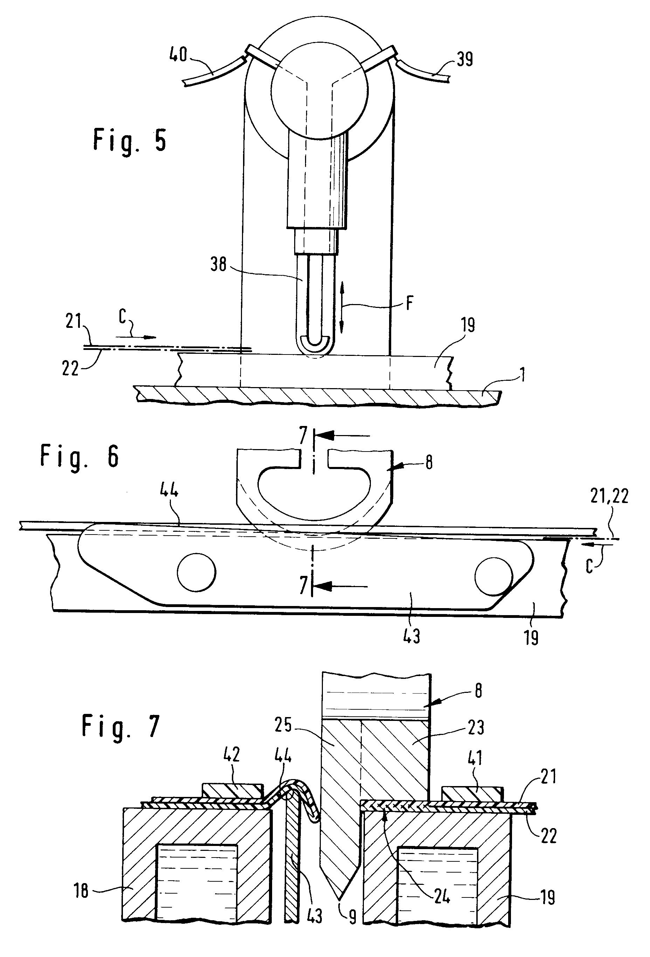

In Figur 4 ist schematisch eine abgewandelte Vorrichtung zum kontinuierlichen Trennschweißen wenigstens zweier aufeinanderliegender Kunststoff-Folien dargestellt, die sich von der Ausführungsform gemäß Figur 1 und 2 lediglich dadurch unterscheidet, daß statt eines oszillierend oder "wiegend" angetriebenen Trennschweißmessers ein kontinuierlich umlaufendes und ebenfalls elektrisch beheiztes Rundmesser 28 vorgesehen ist. Das Rundmesser 28 rotiert in Richtung des Pfeiles D und wird durch einen entsprechenden, zusätzlichen Antrieb in Richtung des Doppelpfeiles E oszillierend auf- und abbewegt. Das Profil des Rundmessers 28 entspricht dem in Figur 3 dargestellten Profil des oszillierend angetriebenen Trennschweißmessers 8, was bedeutet, daß auch das Rundmesser 28 eine Trennkante 9 und einen gegenüber dieser Kante stufenförmig zurückversetzten Schweißabschnitt 23 aufweist. Sowohl die Trennkante 9 als auch die Stufenfläche des Abschnitts 23 erstrecken sich bis unter die von der Oberfläche der Leisten 18, 19 gebildeten Zuführebene der Kunststoff-Folien 21, 22. Im übrigen ist die Wirkungsweise der Vorrichtung gemäß Figur 4 die gleiche wie diejenige der Vorrichtung aus Figur 1 bis 3.

Die Figur 5 zeigt eine weitere abgewandelte Ausführungsform einer Trennschweißvorrichtung, die sich von den bisher beschriebenen Vorrichtungen dadurch unterscheidet, daß das Trennschweißmesser als stoßendes, d. h. in Richtung des Doppelpfeiles F kontinuierlich auf- und abbewegtes Stichmesser 38 ausgebildet ist, welches durch die in Figur 5 schematisch angedeuteten Stromzuleitungen 39, 40 elektrisch aufgeheizt wird. Auch das Stoßmesser 38 ist in seinem an den Folien 21, 22 angreifenden Bereich mit einer Trennkante 9 und einem dieser gegenüber stufenförmig zurückversetzten Schweißabschnitt 23 versehen. Die Wirkungsweise der Vorrichtung nach Figur 5 ist die gleiche wie diejenige der Vorrichtung nach Figur 1 bis 3 bzw. 4.

Die Trennschweißmesser 8, 28 und 38 können mit der Trennkante 9 und dem sich daran anschließenden Schweißabschnitt 23 aus einem Stück gefertigt werden. Alternativ ist es auch möglich, die beiden stufenförmig voneinander abgesetzten Teile 9 und 23 dieser Messer 8, 28, 38 aus zwei separaten, miteinander verbundenen Teilen zu fertigen. Die Höhe der Stufe zwischen der Trennkante 9 und dem Schweißabschnitt 23 kann zwischen 1 und 10 mm liegen; sie hat vorzugsweise einen Wert zwischen 1 und 5 mm, insbesondere von etwa 3 mm.

Die weitere, in Figur 6 und 7 dargestellte Ausführungsform einer Trennschweißvorrichtung weist wiederum das schematisch dargestellte, oszillierend angetriebene Trennschweißmesser 8 gemäß Figur 1 bis 3 auf. Die miteinander durch Trennschweißung zu verbindenden Kunststoff-Folien 21, 22 werden in Richtung des Pfeiles C zugeführt. Wie aus Figur 7 ersichtlich, werden diese Folien 21, 22 wiederum von ortsfesten Leisten 18, 19 abgestützt, wobei jedoch beidseits des Trennschweißmessers 8 mitlaufende Transportriemen 21, 22 an der oberen Folie 21 angreifen.

Wie dargestellt, ist zwischen der Trennkante 9 und der die Abfall-Folienteile aufnehmenden Leiste 18 eine Spannschiene 43 angeordnet, die in Vorlaufrichtung (Pfeil C in Figur 6) der Folien 21, 22 vor dem Trennschweißmesser 8 beginnend sich bis hinter dieses Messers erstreckt und deren obere Randkante 44 gegenüber der die Zuführebene bildenden Leisten 18, 19 derart schräg von unten nach oben verläuft, daß der Abstand dieser Kante in Vorlaufrichtung C bis zu einer oberhalb der Zuführebene gelegenen Position zunimmt. Hierdurch werden die den Abfallstreifen bildenden Folienteile auf der in Figur 7 linken Seite des Trennschweißmessers 8 zwangsläufig angehoben und gespannt, so daß hierdurch die Trennwirkung der Trennkante 9 des Trennschweißmessers 8 unterstützt wird, indem der Abfallstreifen aufgrund seiner zwangsläufigen Anhebung durch die Spannschiene 43 von der auf der gegenüberliegenden Seite des Trennschweißmessers 8 gebildeten Breitschweißnaht 20 weggezogen wird. Zuzüglich kann die Spannschiene 23 auch zu einer etwas kräftigeren Anpressung der Folien 21, 22 an den Schweißabschnitt 23 beitragen.

## Patentansprüche

1. Vorrichtung zum kontinuierlichen Trennschweißen wenigstens zweier aufeinanderliegender, in einer Zuführebene vorgeschobener Kunststoff-Folien mit einem beheizten, die Folien durch eine Schweißnaht miteinander verbindenden und durchtrennenden Trennschweißmesser, das sich mit einer an den Folien angreifenden Trennkante aus einem Bereich oberhalb der Zuführebene bis in einen Bereich unterhalb der Zuführebene erstreckt, wobei zusätzlich zu der in Richtung der Schweißnaht verlaufenden Vorschubbewegung der Kunststoff-Folien relativ zum Trennschweißmesser eine zweite Relativbewegung zwischen Trennschweißmesser und Folien vorgesehen ist, die eine zur Schweißnaht senkrecht gerichtete Komponente hat,
**dadurch gekennzeichnet, daß**
das Trennschweißmesser (8, 28, 38) einen gegenüber seiner Trennkante (9) stufenförmig zurückversetzten, die Oberfläche der einen Folie (21) frei schleifend berührenden, relativ breiten Schweißabschnitt (23) zum Erzeugen einer Breitschweißnaht (20) aufweist, und dieser Schweißabschnitt (23) sich aus einem Bereich oberhalb der Zuführebene der Kunststoff-Folien bis in einen Bereich unterhalb dieser Zuführebene erstreckt.

2. Vorrichtung nach Anspruch 1, dadurch gekennzeichnet, daß die Trennkante (9) und die an der einen Kunststoff-Folie (21) angreifende Fläche des Schweißabschnitts (23) im wesentlichen konzentrisch zueinander gekrümmt sind.

3. Vorrichtung nach Anspruch 1, dadurch gekennzeichnet, daß das Trennschweißmesser (8) als oszillierendes Biegemesser ausgebildet ist.

4. Vorrichtung nach Anspruch 1, dadurch gekennzeichnet, daß das Trennschweißmesser als rotierendes Rundmesser (28) ausgebildet ist.

5. Vorrichtung nach Anspruch 1, dadurch gekennzeichnet, daß das Trennschweißmesser als stoßendes Stichmesser (38) ausgebildet ist.

6. Vorrichtung nach Anspruch 1, dadurch gekennzeichnet, daß zwischen der Trennkante (9) des Trennschweißmessers (8, 28, 38) und einer die abzutrennenden Folienteile aufnehmenden, die Zuführebene definierenden Unterlage (Leiste 18) eine Spannschiene (43) angeordnet ist, die in Vorlaufrichtung (C) der Folien (21, 22) vor dem Trennschweißmesser beginnend sich bis hinter das Trennschweißmesser erstreckt und deren Randkante (44) gegenüber der Unterlage derart schräg verläuft, daß der Abstand der Randkante von der Unterlage in Vorlaufrichtung bis zu einer oberhalb der Unterlage gelegenen Position zunimmt.

7. Vorrichtung nach Anspruch 1, dadurch gekennzeichnet, daß die Trennkante (9) und der Schweißabschnitt (23) des Trennschweißmessers (8, 28, 38) aus einem Stück gefertigt sind.

8. Vorrichtung nach Anspruch 1, dadurch gekennzeichnet, daß die Trennkante (9) und der Schweißabschnitt (23) des Trennschweißmessers (8, 28, 38) zwei separate, miteinander verbundene Teile bilden.

9. Vorrichtung nach Anspruch 1, dadurch gekennzeichnet, daß die Höhe der Stufe zwischen der Trennkante (9) und dem Schweißabschnitt (23) des Trennschweißmessers (8, 28, 38) zwischen 1 und 10 mm, vorzugsweise zwischen 1 und 5 mm liegt.
